# EUROPEAN PATENT SPECIFICATION

(11) **EP 2 251 950 B1**
(45) Date of publication and mention of the grant of the patent: **16.03.2016**
(21) Application number: 10159778.9
(22) Date of filing: 13.04.2010
(51) Int. Cl.: H02G 3/12, A47B 21/00

(54) **Desk box**
Schreibtischbox
Boîte de bureau

(30) Priority: 20.04.2009 SE 0950259
(43) Date of publication of application: 17.11.2010
(73) Proprietor: Schneider Electric Industries SAS, 92500 Rueil-Malmaison (FR)
(72) Inventor: Eriksson, Staffan, 611 56, Nyköping (SE)
(74) Representative: Groth & Co. KB

(56) References cited:
- US-A- 4 792 881

## Description

### Technical Field

The present invention relates to the area of desk boxes recessed in table tops for electric, tele- and data socket connections.

### Background or the Invention

In public environments, there is a need of temporary connecting products such as, e.g., vacuum cleaners, computers, conference equipment and telephones. This may, e.g., be carried out by mounting a desk box in an existing table top and connecting the electric products to this desk box.

The patent specification JP 8008005 discloses a desk box that is formed with a holder provided with an abutment frame, which holder is mounted recessed in a table top. In the holder, an electric insert is mounted that is provided with two switch-in connections. This desk box is further provided with two hinged doors that are opened and closed against each other so that they form a transverse slit across the box. When one plug is connected to this box, at least one of the doors has to be open, and when two plugs are connected, both doors have to be open.

When a plug is connected to such a desk box, accordingly at least one door will always be open, which means that the plug is sticking up above the table surface and may thereby be subjected to knocks and impacts that may give rise to loose connection and spark formation. In addition, the plug becomes immediately exposed to liquids that by accident may be spilled on the table.

### The Object of the Invention

The present invention aims at providing a desk box for electric, tele- and data socket connections that is user-friendly, reasonably liquid-proof as well as plane and concealed from the upperside of a table surface also during use.

A further object of the invention is to provide a space in the box in order to, at least partly, receive electric cables that are connected to the desk box.

In addition, an object of the invention is to enable a desk box that further provides the possibility of connection of electric wires from below.

### Summary of the Invention

By the present invention such as the same is defined in the independent claim, the above-mentioned object is met. Suitable embodiments of the invention are defined in the dependent claims.

The invention concerns a desk box comprising fastening members to fix the desk box in a table top. It also comprises an essentially rectangular abutment frame that is arranged to abut against the table top as well as a lid placed over an opening formed by the abutment frame in the desk box. When the lid is closed, the desk box obtains an essentially plane geometry also when electric cables are connected. The desk box further comprises a first end wall connected to a first short side of the abutment frame and a second end wall connected to a second short side of the abutment frame, a holder being mounted in said end walls. In this connection, the holder is arranged to carry at least one first electric insert to which external electric equipment is connectable by said cables. The holder is formed with first mounting members in which the first electric insert is detachably mounted, the holder being mounted to the end walls at an angle in the interval of 30°-60°, preferably 45°, in relation to the abutment frame so that also the first electric insert obtains the same angle in relation to the abutment frame and thereby the table top. This angled position of the holder and the electric inserts means that a space is created inside the desk box in order to receive the plugs and encase cable connections also when the lid is closed.

In further embodiments of the invention, the holder is provided with second mounting members that are counter-directed to said first mounting members so that at least one second electric insert also can be detachably mounted in the holder for the connection of external electric equipment from the opposite side of the holder. By virtue of said second mounting members, a double-sided mounting of the electric inserts is obtained so that consumers also can be connected from the underside of the table.

In further embodiments of the invention, the holder is formed as a section provided with longitudinal grooves and in which the electric inserts can be continuously variably mounted along the section. By forming the holder as a section having longitudinal grooves, a plurality of electric inserts of different widths can be mounted at optional locations along the section. Also cover lids can be mounted at locations where no insert is mounted in order to obtain a protection against cables penetrating into the section.

In further embodiments of the invention, the lid is provided with a compliant means that connects to the long side of the abutment frame. The compliant means allows cables to be connected to the desk box in spite of the door being closed, thereby preventing dust and objects from coming down into the box.

In further embodiments of the invention, the underside of the lid is connected to a hinge mechanism that is mounted to the long side of the abutment frame so that said mechanism is concealed when the lid is closed. The hinge mechanism is preferably of the type where a push at the front edge of the lid opens a closed lid and where the lid is closed by pressing the lid downward into closed position in which it stops. The concealed mechanism means that the desk box is essentially plane on a level with the table surface both without and with cables connected.

In further embodiments of the invention, the compliant means is provided with an edge bulge adapted to a groove in the lid in order to thereby be mountable on the lid by the edge bulge being inserted into the groove. That the mounting of the means is carried out in this way implies that the means can be easily replaced, e.g., if the connection thereof to the abutment frame has been deformed or if the present means is to be replaced by another type of means.

In further embodiments of the invention, said compliant means is formed either as an elastic edge or as a brush-shaped edge in order for the lid, as far as possible, to connect to the abutment frame when electric wires run out from the desk box. An elastic edge results in a good dust protection with closed door, while a brush-shaped edge results in a plane surface of the box at connected cables. Accordingly, the edge of the lid can be adapted to a specific use of the box.

In further embodiments of the invention, said holder is formed to carry a plurality of electric inserts, cover means or spacer means. By a "long" holder in a "long" desk box, many electric inserts can be mounted and used simultaneously, which in certain cases is desirable. Voltage feed may be used together with broadband, telephones and conference equipment in one and the same desk box, which means a wide field of application.

Accordingly, the invention concerns a desk box comprising at least one electric insert, but often a plurality, to which electric products can be connected from both the front side and the back side of the insert. The insert is placed in a connection cavity in the desk box at an angle so that a space for plugs is formed at the upperside of the inserts in order to allow a lid to be connectable when electric consumers are connected to the inserts. Fastening members are arranged to fit the desk box in a table top.

### Brief Description of the Drawings

The invention will now be described in more detail by means of embodiment examples, reference being made to the accompanying drawings, wherein
- Figure 1: shows a desk box according to the present invention mounted retracted in a table top,
- Figure 2: shows a perspective view from above of the desk box according to the invention,
- Figure 3: shows a side view of the desk box according to Figure 2,
- Figure 4: shows a perspective view from the underside of the desk box according to the invention.

### Description of the Invention

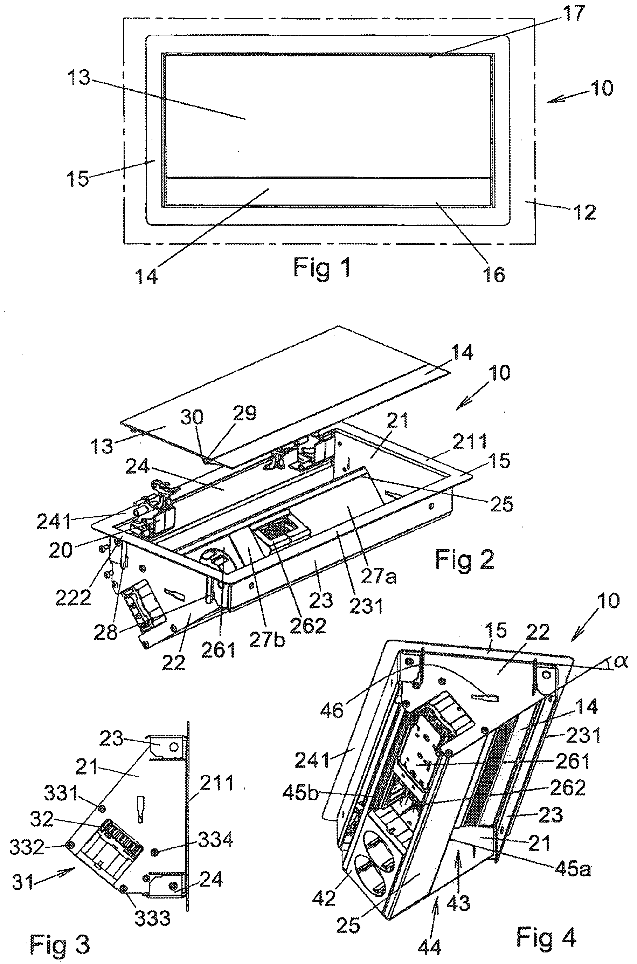

Figure 1 shows a desk box 10 that is embeddedly mounted in a table top 12. The desk box is covered by a lid 13 that is provided with a compliant means 14 that connects to a rectangular abutment frame 15, which abuts flatly against the table top. The compliant means 14 may be manufactured from a soft polymer or be of natural rubber and be formed tapering toward the abutment edge 16 thereof. The lid is further raiseable by it being provided with a hinge mechanism at the opposite edge 17 of the abutment edge 16. As is seen in the figure, the abutment frame, and thereby the desk box, is formed with opposite long sides and opposite short sides orientated perpendicular to each other. When the lid is lowered, the desk box obtains a plane position almost on a level with the surface of the table top, which gives the table a clean and tidy look at the same time as papers, books, etc., even can be placed on top of the desk box.

Figure 2 shows the desk box 10 according to the invention with the lid 13 dismounted from a hinge mechanism 20 that consists of two parts placed internally at each side of the abutment frame 15. The desk box comprises a first end wall 21 connected to a first short side 211 of the abutment frame and a second end wall 22 connected to a second short side 222 of the abutment frame. The end walls 21, 22 are connected with a first supporting edge 23 along a first long side 231 of the abutment frame and with a second supporting edge 24 along a second long side 241 of the abutment frame. Between the two end walls 21, 22, a holder 25 is fixedly mounted, which holder is arranged to carry one or more electric inserts 261, 262. The figure shows electric inserts in the form of an earthed voltage socket 261 and double data sockets 262. In addition, it is shown that the holder furthermore, beside the electric inserts, carries a cover means 27a in order to conceal the inside of the holder when only a few inserts are mounted as well as a spacer means 27b to provide a defined distance between the adjacent inserts. The desk box is further provided with suspension members 28 that are for attachment of a basket, not shown, that can hang under the desk box to take care of so-called cable slack. The suspension members constitute a bent end part of the supporting edges 32, 24. The figure also shows the compliant means 14, which is provided with an edge bulge 29 inserted into a groove 30 in the lid 13.

Figure 3 shows the desk box from the side with the first end wall 21 connected to the first short side 211 of the abutment frame. Furthermore, the first supporting edge 23 and the second supporting edge 24 are shown. The first end wall 21 is provided with a quadratic slot 31 in order to allow the electric inserts mounted in the holder to be electrically connected via connectors 32. The figure also shows that the holder is fixed at the end walls by four rivets 331, 332, 333, 334 at each end of the holder.

Figure 4 shows the desk box 10 from the underside with the holder 25 mounted in the two end walls 21, 22. As is seen in the figure, also the electric inserts are mountable to the second side of the holder 25 and the figure shows a second voltage socket 42 in which plugs can be connected from the underside of the desk box. The back side of this socket is covered, that is seen in Figure 2, by the cover lid 27. Naturally, cover lids may also be connected to the underside of the holder in order to also cover the back side of the earthed voltage socket 261 and the double data socket 262, which both are accessible from the upperside of the desk box. The holder 25 is formed as an aluminium section in two pieces that is provided with longitudinal grooves placed at the front side of the section in the form of first mounting members 45a as well as at the back side of the section in the form of second mounting members 45b so that the electric inserts can be continuously variably placed optionally along the section.

Furthermore, Figures 2-4 show that the holder 25 is mounted at an angle a in relation to the underside of the abutment frame 15 and thereby to the table top as well as mounted nearer the second long side 241 of the abutment frame than the first long side 231 thereof. The angle is preferably approx. 45° but may assume any angle in the interval of 30°-60°. This mounting means that a wedge-shaped space volume 43 is created in the desk box when the lid including the compliant means 14 thereof is closed. The wedge-shaped space volume means that electric plugs can be connected to the electric inserts in spite of the lid being closed. The space volume together with an opening 44 in the desk box underneath between the holder 25 and the first supporting edge 23 gives also a possibility of hiding away the cables connected from the upperside. Furthermore, the figure shows fastening members 46 for the fixing of the desk box in the table top. The fastening members 46 are placed on the end walls 21, 22 and have the shape of a lying bottle. The mounting of an attachment for the fastening member 46 is made by introducing the attachment into the larger part of the opening and then pushing it laterally to the smaller part of the opening. On the attachment, there is a screw mounted and when the same is tightened, it meets the underside of the table top, thereby attaching the desk box.

## Claims

1. Desk box (10) comprising fastening members (28) to fix the desk box (10) in a table top (12), an essentially rectangular abutment frame (15) arranged to abut against the table top (12) as well as a lid (13) placed over an opening formed by the abutment frame (15) in the desk box (10), which desk box (10) further comprises a first end wall (21) connected to a first short side (211) of the abutment frame (15) and a second end wall (22) connected to a second short side (222) of the abutment frame (15), a holder (25) being mounted between said end walls (21, 22) and that the holder (25) is arranged to carry at least one first electric insert (261, 262) to which external electric equipment is connectable, the holder (25) being formed with first mounting members (45a) in which the first electric insert (261, 262) is detachably mounted, the holder (25) being mounted to the end walls (21, 22) at an angle in the interval of 30°-60°, preferably 45°, in relation to the abutment frame (15) so that also the first electric insert (261, 262) obtains the same angle in relation to the abutment frame (15) and thereby the table top (12) in order to form a space volume (43) in the desk box when the lid (13) is closed, **characterized in that** the holder (25) is provided with second mounting members (45b) that are counter-directed to said first mounting members (45a) so that at least one second electric insert (42) also can be detachably mounted in the holder (25) for the connection of external electric equipment from the opposite side of the holder (25).

2. Desk box according to claim 1, **characterised in that** the holder (25) is formed as a section provided with longitudinal grooves and in which the electric inserts (261, 262, 42) can be continuously variably mounted along the section.

3. Desk box according to any one of claims 1-2, **characterized in that** the lid (13) is provided with a compliant means (14) that connects to the first long side (231) of the abutment frame (15).

4. Desk box according to claim 3, **characterized in that** the underside of the lid (13) is connected to a hinge mechanism (20) that is mounted to the second long side (241) of the abutment frame (15) so that said mechanism (20) is concealed when the lid (13) is closed.

5. Desk box according to any one of claims 3-4, **characterized in that** the compliant means (16) is provided with an edge bulge (29) adapted to a groove (30) in the lid in order to thereby be mountable on the lid by the edge bulge (29) being inserted into the groove (30).

6. Desk box according to any one of claims 3-5, **characterized in that** said compliant means (16) is formed either as an elastic edge or as a brush-shaped edge in order for the lid (13), as far as possible, to connect to the abutment frame (15) when electric wires run out from the desk box (10).

7. Desk box according to any one of claims 1-6, **characterized in that** said holder (25) is formed to carry a plurality of electric inserts (261, 262, 42), cover means (27a) or spacer means (27b).

## Patentansprüche

1. Schreibtischbox (10), welche Befestigungselemente (28) zum Befestigen der Schreibtischbox (10) in einem Tischoberteil (12), einen im Wesentlichen rechteckigen Anlagerahmen (15), der dafür eingerichtet ist, an dem Tischoberteil (12) zur Anlage zu kommen, sowie einen Deckel (13), der über einer durch den Anlagerahmen (15) in der Schreibtischbox (10) gebildeten Öffnung angeordnet ist, aufweist, wobei die Schreibtischbox (10) ferner eine erste Endwand (21), die mit einer ersten kurzen Seite (211) des Anlagerahmens (15) verbunden ist, und eine zweite Endwand (22), die mit einer zweiten kurzen Seite (222) des Anlagerahmens (15) verbunden ist, aufweist, wobei ein Halter (25) zwischen den Endwänden (21, 22) angebracht ist, wobei der Halter (25) dafür eingerichtet ist, wenigstens einen ersten elektrischen Einsatz (261, 262) zu tragen, an welchen externe elektrische Geräte anschließbar sind, wobei der Halter (25) mit ersten Montageelementen (45a) ausgebildet ist, in welchen der erste elektrische Einsatz (261, 262) lösbar angebracht ist, wobei der Halter (25) an den Endwänden (21, 22) mit einem Winkel im Intervall von 30°-60°, vorzugsweise 45°, bezüglich des Anlagerahmens (15) angebracht ist, so dass auch der erste elektrische Einsatz (261, 262) denselben Winkel bezüglich des Anlagerahmens (15) und damit des Tischoberteils (12) einnimmt, um ein Raumvolumen (43) in der Schreibtischbox zu bilden, wenn der Deckel (13) geschlossen ist, **dadurch gekennzeichnet, dass** der Halter (25) mit zweiten Montageelementen (45b) versehen ist, welche entgegengesetzt zu den ersten Montageelementen (45a) gerichtet sind, so dass wenigstens ein zweiter elektrischer Einsatz (42) ebenfalls lösbar in dem Halter (25) angebracht werden kann, zum Anschluss externer elektrischer Geräte von der entgegengesetzten Seite des Halters (25) aus.

2. Schreibtischbox nach Anspruch 1, **dadurch gekennzeichnet, dass** der Halter (25) als eine Sektion ausgebildet ist, die mit Längsrillen versehen ist und in welcher die elektrischen Einsätze (261, 262, 42) kontinuierlich variabel entlang der Sektion angebracht werden können.

3. Schreibtischbox nach einem der Ansprüche 1-2, **dadurch gekennzeichnet, dass** der Deckel (13) mit einem nachgiebigen Mittel (14) versehen ist, welches sich an die erste lange Seite (231) des Anlagerahmens (15) anschließt.

4. Schreibtischbox nach Anspruch 3, **dadurch gekennzeichnet, dass** die Unterseite des Deckels (13) mit einem Gelenkmechanismus (20) verbunden ist, welcher an der zweiten langen Seite (241) des Anlagerahmens (15) angebracht ist, so dass der Mechanismus (20) verborgen ist, wenn der Deckel (13) geschlossen ist.

5. Schreibtischbox nach einem der Ansprüche 3-4, **dadurch gekennzeichnet, dass** das nachgiebige Mittel (16) mit einem Randwulst (29) versehen ist, der an eine Rille (30) in dem Deckel angepasst ist, damit es dadurch an dem Deckel angebracht werden kann, indem der Randwulst (29) in die Rille (30) eingesetzt wird.

6. Schreibtischbox nach einem der Ansprüche 3-5, **dadurch gekennzeichnet, dass** das nachgiebige Mittel (16) entweder als ein elastischer Rand oder als ein bürstenförmiger Rand ausgebildet ist, damit der Deckel (13) so weit wie möglich mit dem Anlagerahmen (15) in Verbindung kommt, wenn elektrische Leitungen aus der Schreibtischbox (10) austreten.

7. Schreibtischbox nach einem der Ansprüche 1-6, **dadurch gekennzeichnet, dass** der Halter (25) dafür ausgebildet ist, mehrere elektrische Einsätze (261, 262, 42), Abdeckmittel (27a) oder Abstandsmittel (27b) zu tragen.

## Revendications

1. Boîte de bureau (10) comprenant des éléments de fixation (28) pour fixer la boîte de bureau (10) dans un plateau de table (12), un cadre de butée essentiellement rectangulaire (15) agencé de manière à buter contre le plateau de table (12), ainsi qu'un couvercle (13) placé sur une ouverture formée par le cadre de butée (15) dans la boîte de bureau (10), ladite boîte de bureau (10) comprenant en outre une première paroi d'extrémité (21) qui est connectée à un premier côté court (211) du cadre de butée (15), et une deuxième paroi d'extrémité (22) qui est connectée à un deuxième côté court (222) du cadre de butée (15), un support (25) étant monté entre lesdites parois d'extrémité (21, 22), et en ce que le support (25) est agencé de manière à porter au moins un premier insert électrique (261, 262) auquel un équipement électrique externe peut être connecté, le support (25) étant constitué de premiers éléments de montage (45a) dans lesquels le premier insert électrique (261, 262) est monté de façon détachable, le support (25) étant monté sur les parois d'extrémité (21, 22) selon un angle compris dans la gamme de 30° à 60°, de préférence de 45°, par rapport au cadre de butée (15) de telle sorte que le premier insert électrique (261, 262) obtienne le même angle par rapport au cadre de butée (15) et donc au plateau de table (12) dans le but de former un volume spatial (43) dans la boîte de bureau lorsque le couvercle (13) est fermé, **caractérisée en ce que** le support (25) est pourvu de deuxièmes moyens de montage (45b) qui sont contre-dirigés vers lesdits premiers moyens de montage (45a) de telle sorte qu'au moins un deuxième insert électrique (42) puisse également être monté de façon détachable dans le support (25) pour la connexion d'un équipement électrique externe à partir du côté opposé du support (25).

2. Boîte de bureau selon la revendication 1, **caractérisée en ce que** le support (25) est formé comme une section pourvue de rainures longitudinales, et dans laquelle les inserts électriques (261, 262, 42) peuvent être montés en variation continue le long de la section.

3. Boîte de bureau selon l'une quelconque des revendications 1 ou 2, **caractérisée en ce que** le couvercle (13) est pourvu de moyens d'adaptation (14) qui se connectent au premier côté long (231) du cadre de butée (15).

4. Boîte de bureau selon la revendication 3, **caractérisée en ce que** la face inférieure du couvercle (13) est connectée à un mécanisme de charnière (20) qui est monté sur le deuxième côté long (241) du cadre de butée (15) de telle sorte que ledit mécanisme (20) soit dissimulé lorsque le couvercle (13) est fermé.

5. Boîte de bureau selon l'une quelconque des revendications 3 ou 4, **caractérisée en ce que** les moyens d'adaptation (16) sont pourvus d'un bourrelet de bord (29) adapté à une rainure (30) dans le couvercle dans le but de pouvoir ainsi être montés sur le couvercle par le bourrelet de bord (29) qui est inséré dans la rainure (30).

6. Boîte de bureau selon l'une quelconque des revendications 3 à 5, **caractérisée en ce que** lesdits moyens d'adaptation (16) sont formés soit comme un bord élastique ou un bord en forme de brosse dans le but que le couvercle (13), autant que possible, se connecte au cadre de butée (15) lorsque des fils électriques se prolongent hors de la boîte de bureau (10).

7. Boîte de bureau selon l'une quelconque des revendications 1 à 6, **caractérisée en ce que** ledit support (25) est formé de manière à porter une pluralité d'inserts électriques (261, 262, 42), de moyens de recouvrement (27a) ou de moyens d'écartement (27b).
